# EUROPEAN PATENT APPLICATION

(11) **EP 4 524 026 A1**
(43) Date of publication of application: **19.03.2025**
(21) Application number: 23842700.9
(22) Date of filing: 06.06.2023
(51) Int. Cl.: B63H 21/38, B63B 25/16

(54) **FLOATING STRUCTURE**

(30) Priority: 20.07.2022 JP 2022115203
(71) Applicant: Mitsubishi Shipbuilding Co., Ltd., Tokyo 108-8015 (JP)
(72) Inventor: YAMADA, Daisuke, Yokohama-shi, Kanagawa 220-8401 (JP); KUWAHATA, Kazushi, Yokohama-shi, Kanagawa 220-8401 (JP); HONDA, Akihiro, Yokohama-shi, Kanagawa 220-8401 (JP)
(74) Representative: Studio Torta S.p.A.
(86) International application number: PCT/JP2023/020987
(87) International publication number: WO 2024/018768

(57) **Abstract**

A floating structure according to the present invention comprises: a floating structure main body; a liquified gas tank provided to the floating structure main body and storing a liquified gas; a combustor provided to the floating structure main body and driven by the liquified gas; a liquified gas line connecting the liquified gas tank and the combustor; a knockout drum into which the liquified gas in the liquified gas line is introduced along with purge gas; a recovery tank provided below the knockout drum and into which the liquified gas stored in the knockout drum flows; a pressure equalization pipe communicating a gas phase region of the recovery tank and a gas phase region of the liquified gas line; and a return pipe capable of feeding the liquified gas from the recovery tank to the liquified gas line.

## Description

### Technical Field

The present disclosure relates to a floating structure.

This application claims priority to Japanese Patent Application No. 2022-115203, filed in Japan on July 20, 2022, the content of which is incorporated herein by reference.

### Background Art

PTL 1 discloses a ship (a floating structure) that is propelled on the sea using liquefied gas as fuel. The floating structure includes a storage tank that stores a liquefied gas, an engine that uses the liquefied gas as fuel, and a fuel supply line that supplies the liquefied gas in the storage tank to the engine.

### Citation List

### Patent Literature

[PTL 1] PCT Japanese Translation Patent Publication No. 2021-532016

### Summary of Invention

### Technical Problem

However, in the engine using the liquefied gas as fuel as in PTL 1, it is necessary to purge and discharge the liquefied gas remaining in the engine and the pipe in a case where the operation is stopped for a long period of time or in a case where the supplied fuel is switched. The liquefied gas discharged in this way is recovered by a knockout drum together with the purge gas and is subjected to gas-liquid separation. In addition, the gas-liquid-separated liquefied gas is often evaporated in the knockout drum and then released into the atmosphere or decontaminated by a decontamination device and then discarded, which causes energy loss.

The present disclosure is made to solve the above-described problems, and an object of the present disclosure is to provide a floating structure that can reduce energy loss.

### Solution to Problem

In order to achieve the above object, according to the present disclosure, there is provided a floating structure including a floating main structure, a liquefied gas tank that is provided in the floating main structure and stores liquefied gas, a fuel consumer that is provided in the floating main structure and is driven by the liquefied gas, a liquefied gas line that connects the liquefied gas tank and the fuel consumer, a knockout drum into which the liquefied gas of the liquefied gas line is introduced together with purge gas, a recovery tank that is provided below the knockout drum and into which the liquefied gas stored in the knockout drum flows down, a pressure equalization pipe through which a gas phase region of the recovery tank and a gas phase region of the liquefied gas line communicate with each other, and a returning pipe capable of sending the liquefied gas from the recovery tank to the liquefied gas line.

### Advantageous Effects of Invention

According to the floating structure of the present disclosure, it is possible to reduce energy loss.

### Brief Description of Drawings

Fig. 1 is a side view of a ship according to a first embodiment of the present disclosure.
Fig. 2 is a diagram showing a pipe system of the ship according to the first embodiment of the present disclosure that performs fuel supply and fuel purging.
Fig. 3 is a flowchart showing a procedure for returning the liquefied gas to a liquefied gas line according to the first embodiment of the present disclosure.
Fig. 4 is a diagram showing a pipe system of the ship according to a second embodiment of the present disclosure that performs fuel supply and fuel purging.
Fig. 5 is a diagram showing a pipe system of the ship according to a third embodiment of the present disclosure that performs fuel supply and fuel purging.
Fig. 6 is a diagram showing a pipe system of the ship according to a fourth embodiment of the present disclosure that performs fuel supply and fuel purging.
Fig. 7 is a flowchart showing an example of a procedure for returning the liquefied gas to a liquefied gas line according to the fourth embodiment of the present disclosure.

### Description of Embodiments

### <First Embodiment>

### (Ship)

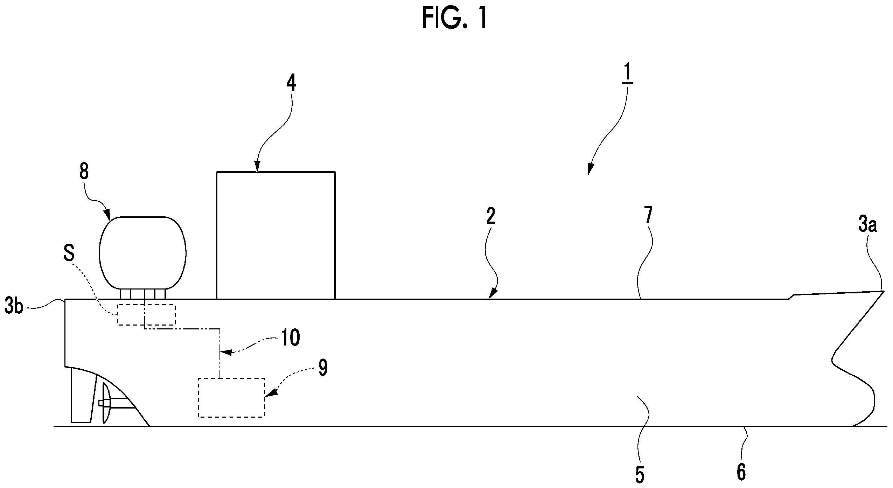

Hereinafter, a floating structure according to a first embodiment of the present disclosure will be described with reference to Figs. 1 to 3.

The floating structure according to the present embodiment is a ship 1 that is propelled on the sea by thermal energy generated by burning liquefied gas. In the present embodiment, liquefied ammonia is used as the liquefied gas of the fuel of the fuel consumer 9. In addition to the liquefied ammonia, examples of the liquefied gas of the fuel of the fuel consumer 9 include liquefied natural gas (LNG) and liquefied petroleum gas (LPG).

As shown in Fig. 1, the ship (floating structure) 1 according to the embodiment includes a hull (floating main structure) 2, a superstructure 4, a liquefied gas tank 8, a fuel consumer 9, and a pipe system 10. The type of the ship 1 is not limited to a specific type. Examples of the type of the ship 1 include a liquefied gas carrier, a ferry, a RORO ship, a car carrier, and a passenger ship.

### (Hull)

The hull 2 has a pair of broadsides 5 and a bottom 6 forming an outer shell of the hull 2. The broadsides 5 include a pair of broadside plates respectively forming right and left broadsides. The bottom 6 includes a bottom plate connecting the broadsides 5. The outer shell of the hull 2 has U-shaped in a cross section orthogonal to the bow-stern direction by the pair of broadsides 5 and the bottom 6.

The hull 2 further includes an upper deck 7 which is a full-open deck disposed in the uppermost layer. The superstructure 4 is formed on the upper deck 7. An accommodation space and the like are provided inside the superstructure 4. In the ship 1 according to the embodiment, for example, a cargo space (not shown) for loading cargo is provided on a bow 3a side in the bow-stern direction with respect to the superstructure 4.

### (Liquefied Gas Tank)

The liquefied gas tank 8 is provided in the hull 2 and stores the liquefied gas as fuel for a fuel consumer 9 described below. Although the liquefied gas tank 8 illustrated in the present embodiment is installed on the upper deck 7 on the stern 3b side with respect to the superstructure 4, the disposition of the liquefied gas tank 8 is not limited to the upper deck 7 on the stern 3b side with respect to the superstructure 4.

### (Fuel Consumer)

The fuel consumer 9 is a device that is driven by combustion of the liquefied gas supplied from the liquefied gas tank 8 and generates thermal energy, and is provided in the hull 2 described above. Examples of the fuel consumer 9 include an internal combustion engine used as a main engine for propelling the ship 1, an internal combustion engine used as a generator that supplies electricity to the inside of the ship, a boiler that generates steam as an operating fluid, and the like.

### (Pipe System)

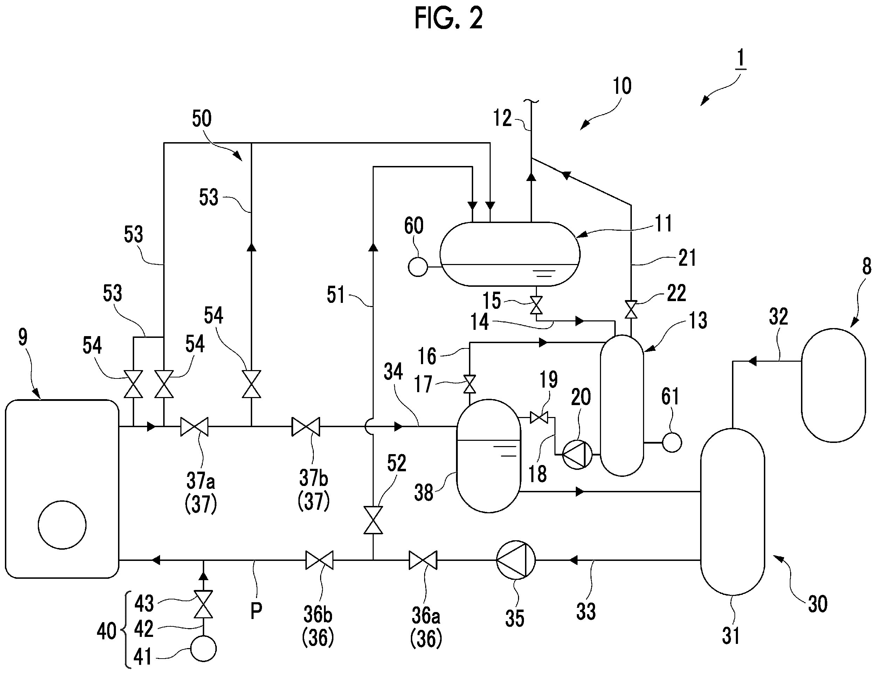

The pipe system 10 performs supply of the liquefied gas from the liquefied gas tank 8 to the fuel consumer 9, purging of the liquefied gas remaining in the fuel consumer 9, and the like. Hereinafter, the configuration of the pipe system 10 will be described with reference to Fig. 2.

As shown in Fig. 2, the pipe system 10 includes a liquefied gas line 30, a purge gas supplying device 40, a purge line 50, a knockout drum 11, an exhaust pipe 12, a first liquid level sensor 60, a recovery pipe 14, a recovery shut-off valve 15, a recovery tank 13, a second liquid level sensor 61, a pressure equalization pipe 16, a pressure equalization shut-off valve 17, a returning pipe 18, a returning shut-off valve 19, a returning pump 20, a release pipe 21, and a release shut-off valve 22. Each configuration of the pipe system 10 is provided in the fuel preparation room S provided in the hull 2. The fuel preparation room S has an air-tight structure, and the inside of the fuel preparation room S is ventilated by a ventilation device (not shown).

It should be noted that each configuration of the pipe system 10 may not be provided in the fuel preparation room S.

### (Liquefied Gas Line)

The liquefied gas line 30 connects the liquefied gas tank 8 and the fuel consumer 9. The inside of the liquefied gas line 30 is maintained at a pressure higher than the atmospheric pressure. In addition, the liquefied gas line 30 is maintained at a pressure higher than the saturated vapor pressure at the temperature at each location in the system. Therefore, the gas in the liquefied gas line 30 can be maintained in a liquefied state. The liquefied gas line 30 includes an introduction pipe 32, an introduction portion 31, a supply pipe 33, a supply pump 35, a supply shut-off valve 36, a return pipe 34, a return shut-off valve 37, and a catch tank 38.

### (Introduction Pipe)

The introduction pipe 32 is a pipe that connects the liquefied gas tank 8 and the introduction portion 31 to communicate with each other.

### (Introduction Portion)

The introduction portion 31 is a tank into which the liquefied gas is introduced from the liquefied gas tank 8 through the introduction pipe 32. In addition, the introduction portion 31 is also a tank that is connected to the return pipe 34 and guides the liquefied gas stored in the catch tank 38. That is, the introduction portion 31 is a mixing tank capable of temporarily storing the liquefied gas guided from the liquefied gas tank 8 and the catch tank 38.

### (Supply Pipe)

The supply pipe 33 is a pipe that supplies the liquefied gas guided to the introduction portion 31 to the fuel consumer 9. A supply pump 35, a supply shut-off valve 36, a heat exchanger (not shown), and a pressure regulating valve (not shown) are provided in the middle of the supply pipe 33.

### (Supply Pump)

The supply pump 35 pumps the liquefied gas from the introduction portion 31 toward the fuel consumer 9.

### (Supply Shut-off Valve)

The supply shut-off valve 36 is provided in the supply pipe 33 between the supply pump 35 and the fuel consumer 9. That is, the two supply shut-off valve 36 are provided in parallel in the flow direction of the liquefied gas in the supply pipe 33 on the downstream side of the supply pump 35. The supply shut-off valve 36 is a so-called main fuel shut-off valve that is provided to be able to open and close the supply pipe 33 and shuts off the flow of the fluid in the supply pipe 33 by closing the supply pipe 33. Hereinafter, in the two supply shut-off valves 36 provided in the supply pipe 33, the supply shut-off valve 36 on the upstream side (the liquefied gas tank 8 side) will be referred to as an upstream side master fuel valve 36a, and the supply shut-off valve 36 on the downstream side (the fuel consumer 9 side) will be referred to as a downstream side supply shut-off valve 36b.

### (Return Pipe)

The return pipe 34 is a pipe that returns surplus liquefied gas that is not used as fuel in the fuel consumer 9 to the introduction portion 31. A return shut-off valve 37, a catch tank 38, a heat exchanger (not shown), and a pressure/flow regulation valve (not shown) are provided in the middle of the return pipe 34.

### (Return Shut-off Valve)

A plurality of return shut-off valves 37 are provided in parallel in a flow direction of the liquefied gas. In the present embodiment, an example is shown in which two return shut-off valves 37 are provided in parallel in the flow direction of the liquefied gas. The return shut-off valve 37 is also a so-called main fuel shut-off valve that is provided to be able to open and close the return pipe 34, and shuts off the flow of the fluid in the return pipe 34 by closing the return pipe 34. Hereinafter, in the two return shut-off valves 37 provided in the return pipe 34, the return shut-off valve 37 on the upstream side (the fuel consumer 9 side) will be referred to as an upstream side return shut-off valve 37a, and the return shut-off valve 37 on the downstream side (the liquefied gas tank 8 side) will be referred to as a downstream side master fuel valve 37b.

### (Catch Tank)

The catch tank 38 is provided on a side of the liquefied gas tank 8 with respect to the two return shut-off valves 37, that is, in the return pipe 34 on a downstream side of the two return shut-off valves 37. The catch tank 38 temporarily stores the liquefied gas returned from the fuel consumer 9. A liquid phase consisting of the liquefied gas and a gas phase consisting of the vaporized gas of the liquefied gas or the like are formed in the catch tank 38. In the present embodiment, the liquefied gas returned from the fuel consumer 9 is introduced into the liquid phase of the catch tank 38. Then, the liquefied gas in the liquid phase stored in the catch tank 38 is returned to the introduction portion 31 through the return pipe 34. The internal pressure of the catch tank 38 is maintained at, for example, a high pressure of about 2.5 MPa.

A purge gas supplying device 40 that supplies purge gas to the inside of the fuel consumer 9 is provided in the liquefied gas line 30 described above.

### (Purge Gas Supplying Device)

The purge gas supplying device 40 performs so-called purging of replacing the liquefied gas remaining in the fuel consumer 9 with the purge gas. The purge gas is, for example, an inert gas such as nitrogen. The purge gas supplying device 40 includes a purge gas supply unit 41, a purge gas supply pipe 42, and a purge gas supply valve 43.

### (Purge Gas Supply Unit)

The purge gas supply unit 41 is capable of supplying the purge gas to the purge gas supply pipe 42.

### (Purge Gas Supply Pipe)

The purge gas supply pipe 42 connects the purge gas supply unit 41 and the liquefied gas line 30. The purge gas supply pipe 42 is connected to the purge target region P.

The purge target region P is a region including the fuel consumer 9 side at least between the fuel consumer 9 and the upstream side master fuel valve 36a of the supply pipe 33 and the downstream side master fuel valve 37b of the return pipe 34 in the liquefied gas line 30. In the present embodiment, the purge gas supply pipe 42 is connected between the downstream side supply shut-off valve 36b and the fuel consumer 9 in the supply pipe 33.

### (Purge Gas Supply Valve)

The purge gas supply valve 43 is provided in the purge gas supply pipe 42. The purge gas supply valve 43 is provided to be able to open and close the purge gas supply pipe 42. The purge gas supply valve 43 closes the purge gas supply pipe 42 in a normal time (in a case in which the fuel consumer 9 is driven), and shuts off the supply of the purge gas from the purge gas supply unit 41 to the purge target region P of the pipe system 10.

The purge gas supply valve 43 opens the purge gas supply pipe 42 in a case where the ammonia operation of the fuel consumer 9 is stopped or the like. At this time, the supply pipe 33 and the return pipe 34 are closed by the upstream side master fuel valve 36a and the downstream side master fuel valve 37b, and the flow of the liquefied gas between the liquefied gas tank 8 and the fuel consumer 9 is shut off. That is, the supply of the liquefied gas from the liquefied gas tank 8 to the fuel consumer 9 is stopped. In this state, in a case where the purge gas supply valve 43 is operated to open the purge gas supply pipe 42, the purge gas is supplied from the purge gas supply unit 41 to the purge target region P. The purge gas supplying device 40 supplies the purge gas to the purge target region P to replace the liquefied gas in the purge target region P with the purge gas.

The liquefied gas is extruded from the purge target region P to the purge line 50 by the purge gas supplied from the purge gas supplying device 40.

### (Purge Line)

The purge line 50 guides the liquefied gas and the purge gas extruded by the purge gas from the purge target region P of the liquefied gas line 30 to the knockout drum 11. The purge line 50 includes a supply side purge pipe 51, a supply side purge valve 52, a return side purge pipe 53, and a return side purge valve 54.

### (Supply Side Purge Pipe)

The supply side purge pipe 51 connects the supply pipe 33 and the knockout drum 11. An end portion of the supply side purge pipe 51 on the supply pipe 33 side is connected to a region between the two supply shut-off valves 36 in the supply pipe 33. The supply side purge valve 52 that can open and close the supply side purge pipe 51 is provided in the supply side purge pipe 51.

### (Supply Side Purge Valve)

The supply side purge valve 52 closes the supply side purge pipe 51 in a normal time (in a case in which the fuel consumer 9 is driven), and prevents the inflow of the liquefied gas from the supply pipe 33 to the supply side purge pipe 51. On the other hand, the supply side purge valve 52 opens the supply side purge pipe 51 in a case where the purge gas is supplied by the purge gas supplying device 40. In a case where the supply side purge pipe 51 is opened, the liquefied gas and the purge gas that are extruded from the purge target region P by the purge gas, flow into the supply side purge pipe 51. The liquefied gas and the purge gas that flow into the supply side purge pipe 51 are guided to the knockout drum 11. The supply side purge valve 52 according to the present embodiment constitutes a so-called double block and bleed valve together with the two supply shut-off valves 36.

In addition, a plurality of supply side purge pipes 51 may be provided in the supply pipe 33, and in this case, the supply side purge valve 52 is provided at least one for each supply side purge pipe 51.

### (Return Side Purge Pipe)

The return side purge pipe 53 connects the return pipe 34 and the knockout drum 11. In the present embodiment, three return side purge pipes 53 are provided. An end portion of one of the three return side purge pipes 53 on the return pipe 34 side is connected to a region between the two return shut-off valves 37 in the return pipe 34. The end portions of two out of the three return side purge pipes 53 on the return pipe 34 side are connected to a region between the fuel consumer 9 and the upstream side return shut-off valve 37a in the return pipe 34. These three return side purge pipes 53 are joined on the downstream side and are connected to the knockout drum 11. A return side purge valve 54 that can open and close the return side purge pipe 53 is provided in each return side purge pipe 53.

### (Return Side Purge Valve)

The return side purge valve 54 closes the return side purge pipe 53 in a normal time (in a case in which the fuel consumer 9 is driven) and prevents the inflow of the liquefied gas from the return pipe 34 to the return side purge pipe 53. On the other hand, the return side purge valve 54 opens the return side purge pipe 53 in a case where the purge gas is supplied by the purge gas supplying device 40. In a case where the return side purge pipe 53 is opened, the liquefied gas and the purge gas that are extruded from the purge target region P by the purge gas, flow into the return side purge pipe 53. The liquefied gas and the purge gas that flow into the return side purge pipe 53 are guided to the knockout drum 11. The return side purge valve 54 according to the present embodiment constitutes a so-called double block and bleed valve together with the two return shut-off valves 37.

In addition, one or two, or in a plurality of four or more return side purge pipes 53 may be provided in the return pipe 34, and the number of return side purge pipes 53 may be appropriately changed. Regardless of the number of return side purge pipes 53, the return side purge valve 54 is provided at least one for each return side purge pipe 53.

The purge line 50 described above connects the liquefied gas line 30 and the knockout drum 11.

### (Knockout Drum)

The liquefied gas in the liquefied gas line 30 is introduced into the knockout drum 11 together with the purge gas. The knockout drum 11 performs gas-liquid separation of the liquefied gas (liquid) and the gas (vapor) such as the gas generated by evaporation of the liquefied gas and the purge gas. The internal pressure of the knockout drum 11 is maintained close to the atmospheric pressure.

The liquefied gas in the liquid phase of the liquefied gas guided to the knockout drum 11 through the purge line 50 is stored in the knockout drum 11. The liquefied gas stored in the knockout drum 11 flows down to the recovery tank 13 provided below the knockout drum 11 through the recovery pipe 14. Therefore, the storage amount of the liquefied gas in the knockout drum 11 gradually decreases. A first liquid level sensor 60 is provided in the knockout drum 11 in order to measure the storage amount of the liquefied gas in the knockout drum 11.

On the other hand, the gas in the gas phase, such as the purge gas, guided to the knockout drum 11 through the purge line 50 described above, is discharged to the outside through the exhaust pipe 12 communicating with the knockout drum 11.

### (Exhaust Pipe)

The exhaust pipe 12 extends from the knockout drum 11. The exhaust pipe 12 communicates with the gas phase in the knockout drum 11. An end portion of the exhaust pipe 12 on the side opposite to the knockout drum 11 may be opened to the atmosphere outside the ship 1, or may be connected to a decontamination device (not shown) that decontaminates gas in a gas phase generated by evaporation of the liquefied gas.

### (First Liquid Level Sensor)

The first liquid level sensor 60 detects a position of the liquid level of the liquefied gas in the knockout drum 11. The first liquid level sensor 60 can adjust the flow rate of the liquefied gas that is guided from the knockout drum 11 to the recovery tank 13 such that, for example, the storage amount of the liquefied gas in the knockout drum 11 is maintained between a predetermined upper limit value and a predetermined lower limit value.

### (Recovery Pipe)

The recovery pipe 14 guides the liquefied gas from the knockout drum 11 to the recovery tank 13. The recovery shut-off valve 15 that can open and close the recovery pipe 14 is provided in the recovery pipe 14.

### (Recovery Shut-off Valve)

The recovery shut-off valve 15 opens the recovery pipe 14 to allow the liquefied gas in the recovery pipe 14 to move and closes the recovery pipe 14 to shut off the movement of the liquefied gas in the recovery pipe 14. In the following, a state where the recovery shut-off valve 15 closes the recovery pipe 14 is referred to as a closing state of the recovery shut-off valve 15, and a state where the recovery shut-off valve 15 opens the recovery pipe 14 is referred to as an opening state of the recovery shut-off valve 15.

### (Recovery Tank)

The recovery tank 13 recovers the liquefied gas stored in the knockout drum 11. The recovery tank 13 has a volume capable of storing all of the liquefied gas stored in the knockout drum 11. For example, the volume of the recovery tank 13 is larger than the volume of the knockout drum 11. Since the recovery tank 13 is equalized to have a uniform pressure with both the knockout drum 11 and the liquefied gas line 30, a pressure vessel having a wide pressure range is used. In the present embodiment, the recovery tank 13 is disposed in the vertical direction at a position facing the catch tank 38 in the horizontal direction.

A second liquid level sensor 61 is provided in the recovery tank 13 in order to measure the storage amount of the liquefied gas tank 8 in the recovery tank 13. In addition, the recovery tank 13 is connected to the knockout drum 11 by the recovery pipe 14 and is connected to the liquefied gas line 30 by the pressure equalization pipe 16 and the returning pipe 18. The recovery tank 13 stores the liquefied gas supplied from the knockout drum 11 and guides the liquefied gas to the liquefied gas line 30 through the returning pipe 18. In addition, the recovery tank 13 is connected to the exhaust pipe 12 by the release pipe 21.

### (Second Liquid Level Sensor)

The second liquid level sensor 61 detects a position of the liquid level of the liquefied gas in the recovery tank 13. With the second liquid level sensor 61, the liquefied gas can be guided from the recovery tank 13 to the liquefied gas line 30 while the storage amount of the liquefied gas in the recovery tank 13 is maintained between the predetermined upper limit value and the predetermined lower limit value.

### (Pressure Equalization Pipe)

The pressure equalization pipe 16 allows the gas phase region of the recovery tank 13 and the gas phase region of the liquefied gas line 30 to communicate with each other, and can equalize the pressure between the recovery tank 13 and the liquefied gas line 30. In the present embodiment, the pressure equalization pipe 16 allows the gas phase region of the recovery tank 13 and the gas phase region of the catch tank 38 of the liquefied gas line 30 to communicate with each other.

### (Pressure Equalization Shut-off Valve)

The pressure equalization shut-off valve 17 is provided in the pressure equalization pipe 16 and opens and closes the pressure equalization pipe 16. For example, the pressure equalization pipe 16 is opened to allow the gas in the pressure equalization pipe 16 to move, and the pressure equalization pipe 16 is closed to shut off the movement of the gas in the pressure equalization pipe 16. Hereinafter, a state where the pressure equalization shut-off valve 17 closes the pressure equalization pipe 16 is referred to as a closing state of the pressure equalization shut-off valve 17, and a state where the pressure equalization shut-off valve 17 opens the pressure equalization pipe 16 is referred to as an opening state of the pressure equalization shut-off valve 17.

### (Returning Pipe)

The returning pipe 18 communicates the recovery tank 13 with the liquefied gas line 30. The returning pipe 18 is capable of sending the liquefied gas from the recovery tank 13 to the liquefied gas line 30. In the present embodiment, the returning pipe 18 communicates the recovery tank 13 with the catch tank 38. The returning pipe 18 is provided with the returning shut-off valve 19 that can open and close the returning pipe 18 and the returning pump 20.

### (Returning Shut-off Valve)

The returning shut-off valve 19 opens and closes the returning pipe 18. The returning shut-off valve 19, for example, opens the returning pipe 18 to allow the movement of the liquefied gas in the returning pipe 18, and while shutting-off the movement of the liquefied gas in the returning pipe 18 by closing the returning pipe 18. In the following, a state where the returning shut-off valve 19 closes the returning pipe 18 is referred to as a closing state of the returning shut-off valve 19, and a state where the returning shut-off valve 19 opens the returning pipe 18 is referred to as an opening state of the returning shut-off valve 19.

### (Returning Pump)

The returning pump 20 is provided in the returning pipe 18 on the side of the recovery tank 13 with respect to the returning shut-off valve 19. The returning pump 20 pumps the liquefied gas from the recovery tank 13 to the liquefied gas line 30. In the present embodiment, the returning pump 20 pumps the liquefied gas from the recovery tank 13 to the catch tank 38. The liquefied gas pumped by the returning pump 20 is introduced into the catch tank 38.

### (Release Pipe)

The release pipe 21 communicates the inside of the recovery tank 13 with the outside of the recovery tank 13. In the present embodiment, the release pipe 21 connects the recovery tank 13 and the exhaust pipe 12, and communicates the gas phase region of the knockout drum 11 with the gas phase region of the recovery tank 13 through the exhaust pipe 12. The release shut-off valve 22 is provided in the release pipe 21.

### (Release Shut-off Valve)

The release shut-off valve 22 opens and closes the release pipe 21. The release shut-off valve 22, for example, opens the release pipe 21 to allow the gas in the release pipe 21 to move and closes the release pipe 21 to shut off the movement of the gas in the release pipe 21. In the following, a state where the release shut-off valve 22 closes the release pipe 21 is referred to as a closing state of the release shut-off valve 22, and a state where the release shut-off valve 22 opens the release pipe 21 is referred to as an opening state of the release shut-off valve 22.

### (Procedure for Returning Liquefied Gas)

In the ship 1 described above, the purged liquefied gas is guided to the knockout drum 11 and then returned to the liquefied gas line 30.

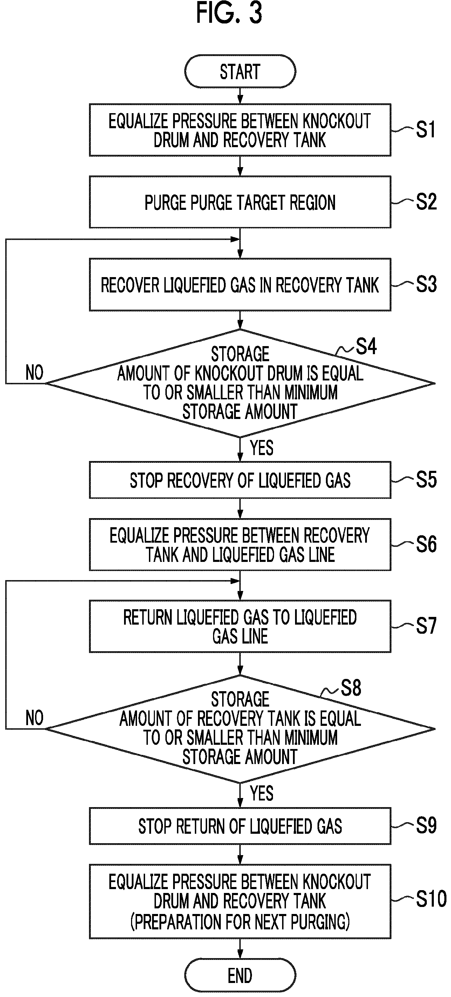

Hereinafter, a procedure for returning the purged liquefied gas to the liquefied gas line 30 will be described with reference to the flowchart of Fig. 3. It should be noted that, before the start of the purging, the recovery shut-off valve 15, the pressure equalization shut-off valve 17, the returning shut-off valve 19, and the release shut-off valve 22 are in the closing state.

First, the release shut-off valve 22 is brought into the opening state to equalize the pressure between the knockout drum 11 and the recovery tank 13 (Step S1). In addition, in Step S1, the recovery shut-off valve 15 is brought into the opening state. In a case where the release shut-off valve 22 and the recovery shut-off valve 15 are already in the opening state and the pressure between the knockout drum 11 and the recovery tank 13 is equalized, Step S1 can be omitted.

In this state (an initial state after Step S1 is completed), the purge gas supplying device 40 is operated to supply the purge gas to the purge target region P to purge the purge target region P (Step S2). In a case where the purging is started, the liquefied gas guided from the purge target region P to the knockout drum 11 is temporarily stored in the knockout drum 11. At this time, the liquefied gas is stored in the knockout drum 11 until the liquid level of the liquefied gas in the knockout drum 11 is positioned above the lower limit position detected by at least the first liquid level sensor 60.

Hereinafter, the storage amount of the liquefied gas in the knockout drum 11 in a case where the liquid level of the liquefied gas in the knockout drum 11 is at the lower limit position detected by the first liquid level sensor 60 is referred to as the minimum storage amount of the knockout drum 11. The minimum storage amount of the knockout drum 11 is an amount at which the knockout drum 11 can be regarded as being in an empty state.

In the knockout drum 11, the liquefied gas in the liquid phase, the purge gas in the gas phase, and the evaporated gas of the liquefied gas are separated into a gas and a liquid.

Thereafter, since the recovery shut-off valve 15 is in the opening state, the liquefied gas flows and falls from the knockout drum 11 to the recovery tank 13. In this way, the liquefied gas is recovered in the recovery tank 13 (Step S3). Then, the liquid level of the liquefied gas in the knockout drum 11 decreases.

Subsequently, the first liquid level sensor 60 detects whether or not the liquid level of the liquefied gas in the knockout drum 11 is at the lower limit position, and it is determined whether or not the storage amount of the knockout drum 11 is equal to or smaller than the minimum storage amount (Step S4). In a case where the storage amount of the knockout drum 11 is not equal to or smaller than the minimum storage amount (Step S4; NO), the liquefied gas is continuously recovered (Step S3). On the other hand, in a case where the storage amount of the knockout drum 11 is equal to or smaller than the minimum storage amount (Step S4; YES), the recovery shut-off valve 15 and the release shut-off valve 22 are brought into the closing state, and the recovery of the liquefied gas is stopped (Step S5).

After the completion of Step S5, the liquefied gas is stored in the recovery tank 13 until the liquid level of the liquefied gas in the recovery tank 13 is positioned above the lower limit position detected by at least the second liquid level sensor 61.

Hereinafter, the storage amount of the liquefied gas in the recovery tank 13 in a case where the liquid level of the liquefied gas in the recovery tank 13 is at the lower limit position detected by the second liquid level sensor 61 is referred to as the minimum storage amount of the recovery tank 13. The minimum storage amount of the recovery tank 13 is an amount at which the recovery tank 13 can be regarded as being in an empty state.

Then, the pressure equalization shut-off valve 17 is brought into the opening state to equalize the pressure between the recovery tank 13 and the liquefied gas line 30 (Step S6). More specifically, the pressure between the recovery tank 13 and the catch tank 38 is equalized.

Then, the returning shut-off valve 19 is brought into the opening state, and the returning pump 20 is started. Then, the liquefied gas is sent from the recovery tank 13 to the liquefied gas line 30. In this way, the liquefied gas is returned to the liquefied gas line 30 (Step S7).

Subsequently, the second liquid level sensor 61 detects whether or not the liquid level of the liquefied gas in the recovery tank 13 is lower than the lower limit position, and it is determined whether or not the storage amount of the recovery tank 13 is equal to or smaller than the minimum storage amount (Step S8). In a case where the storage amount of the recovery tank 13 is not equal to or smaller than the minimum storage amount (Step S8; NO), the liquefied gas is continuously returned (Step S7). On the other hand, in a case where the storage amount of the recovery tank 13 is equal to or smaller than the minimum storage amount (Step S8; YES), the returning shut-off valve 19 and the pressure equalization shut-off valve 17 are brought into the closing state, and the return of the liquefied gas is stopped (Step S9).

Then, the release shut-off valve 22 is brought into the opening state to equalize the pressure between the knockout drum 11 and the recovery tank 13 (Step S10). In addition, in Step S10, the recovery shut-off valve 15 is brought into the opening state. Step S10 is a step for preparing for the next purging.

After the above-described steps, the procedure for returning the purged liquefied gas to the liquefied gas line 30 is completed.

In the above-described procedure for returning the liquefied gas, each time the operation of changing the recovery shut-off valve 15, the pressure equalization shut-off valve 17, the returning shut-off valve 19, and the release shut-off valve 22 from the closing state to the opening state is performed, it is checked whether or not the recovery shut-off valve 15, the pressure equalization shut-off valve 17, the returning shut-off valve 19, and the release shut-off valve 22 are in the opening state, and conversely, each time the operation of changing the recovery shut-off valve 15, the pressure equalization shut-off valve 17, the returning shut-off valve 19, and the release shut-off valve 22 from the opening state to the closing state is performed, it is checked whether or not the recovery shut-off valve 15, the pressure equalization shut-off valve 17, the returning shut-off valve 19, and the release shut-off valve 22 are in the closing state. These confirmations may be visually performed or may be automatically performed by a control device (not shown).

In addition, the procedure for returning the liquefied gas described above may be manually performed or may be automatically performed by a control device (not shown).

### (Actions and Effects)

According to the ship 1 of the present embodiment, the following actions and effects are exhibited.

In the present embodiment, the ship 1 includes a hull 2, a fuel consumer 9, a knockout drum 11, a recovery tank 13, a pressure equalization pipe 16, and a returning pipe 18. The liquefied gas tank 8 is provided in the floating main structure, and stores the liquefied gas. The fuel consumer 9 is provided in the floating main structure and is driven by the liquefied gas. The liquefied gas line 30 connects the liquefied gas tank 8 and the fuel consumer 9. The liquefied gas in the liquefied gas line 30 is introduced into the knockout drum 11 together with the purge gas. The recovery tank 13 is provided below the knockout drum 11. The liquefied gas stored in the knockout drum 11 flows down into the recovery tank 13. The pressure equalization pipe 16 communicates the gas phase region of the recovery tank 13 with the gas phase region of the liquefied gas line 30. The returning pipe 18 is capable of sending the liquefied gas from the recovery tank 13 to the liquefied gas line 30.

The liquefied gas in the knockout drum 11 is sent to the recovery tank 13 by gravity. Thereafter, in a case where the pressure between the recovery tank 13 and the liquefied gas line 30 is equalized by the pressure equalization pipe 16, the liquefied gas in the recovery tank 13 is sent to the liquefied gas line 30 through the returning pipe 18. In this way, the ship 1 can send the liquefied gas stored in the knockout drum 11 again to the liquefied gas line 30 through the recovery tank 13. In addition, by recovering the liquefied gas in the knockout drum 11 by the recovery tank 13, the knockout drum 11 can be quickly emptied. Therefore, the amount of the liquefied gas in the knockout drum 11 that is evaporated and released into the atmosphere can be reduced. Therefore, since the amount of the liquefied gas lost in the purging can be minimized, it is possible to reduce energy loss.

In addition, since the pressure equalization pipe 16 equalizes the pressure between the recovery tank 13 and the liquefied gas line 30 and the difference in pressure between the recovery tank 13 and the liquefied gas line 30 is reduced, the liquefied gas in the recovery tank 13 can be smoothly sent to the liquefied gas line 30.

Therefore, according to the above configuration, in a case where the liquefied gas is sent to the liquefied gas line 30 through the returning pipe 18, it is sufficient to equalize the pressure between the recovery tank 13 and the liquefied gas line 30, and it is not necessary to equalize the pressure between the knockout drum 11 and the liquefied gas line 30. Therefore, it is sufficient that only the recovery tank 13 is a pressure tank having a wide pressure range that can be adjusted from the atmospheric pressure to a high pressure equivalent to that of the liquefied gas line 30, and thus, it is not necessary to improve the pressure resistance of the knockout drum 11. In addition, by providing the recovery tank 13, the high-pressure pump for sending the liquefied gas from the knockout drum 11 to the liquefied gas line 30 is not necessary.

In addition, a decontamination device (not shown) such as a device that performs a treatment such as dilution before releasing the gas in the knockout drum 11 into the atmosphere may be installed. However, in this case, in a case where all the large amount of the purged liquefied gas is to be decontaminated, the decontamination device is enlarged, or the processing time for the liquefied gas decontamination processing is increased. On the other hand, according to the above configuration, since the liquefied gas received by the knockout drum 11 can be reused by the fuel consumer 9, it is possible to reduce the size of the decontamination device or to shorten the processing time for the decontamination treatment of the liquefied gas. In particular, in a case where the liquefied gas as the fuel of the fuel consumer 9 is ammonia, the effect of reducing the size of the decontamination device is more remarkable.

In the present embodiment, the ship 1 includes a returning pump 20. The returning pump 20 is provided in the returning pipe 18 and pumps the liquefied gas from the recovery tank 13 to the liquefied gas line 30.

Accordingly, the ship 1 can send the liquefied gas from the recovery tank 13 to the liquefied gas line 30 by the returning pump 20. Therefore, the ship 1 can send the liquefied gas from the recovery tank 13 to the liquefied gas line 30 regardless of the position of the recovery tank 13 with respect to the liquefied gas line 30. The restriction on the disposition of the recovery tank 13 is relaxed. As a result, the recovery tank 13 can be disposed in the free space of the ship 1. There may be a case where the size of the ship 1 is reduced.

In addition, the pressure equalization pipe 16 equalizes the pressure between the recovery tank 13 and the liquefied gas line 30, and the difference in pressure between the recovery tank 13 and the liquefied gas is reduced. In a case where the returning pump 20 is started in this state, the liquefied gas can be pumped with a small amount of power. As a result, since the returning pump 20 having a low cost can be used, it is possible to reduce the manufacturing cost of the ship 1.

In the present embodiment, the ship 1 includes a recovery pipe 14, a recovery shut-off valve 15, a pressure equalization shut-off valve 17, and a returning shut-off valve 19. The recovery pipe 14 guides the liquefied gas from the knockout drum 11 to the recovery tank 13. The recovery shut-off valve 15 is provided in the recovery pipe 14 and is capable of opening and closing the recovery pipe 14. The pressure equalization shut-off valve 17 is provided in the pressure equalization pipe 16 and is capable of opening and closing the pressure equalization pipe 16. The returning shut-off valve 19 is provided in the returning pipe 18 and is capable of opening and closing the returning pipe 18.

In the present embodiment, the recovery shut-off valve 15 is operated to open the recovery pipe 14, and the liquefied gas is sent from the knockout drum 11 to the recovery tank 13. In a case where the supply of the liquefied gas from the knockout drum 11 to the recovery tank 13 is completed, the recovery shut-off valve 15 is operated to close the recovery pipe 14 and shut off the flow of the liquefied gas. Thereafter, the pressure equalization shut-off valve 17 is operated to open the pressure equalization pipe 16, and the pressure between the recovery tank 13 and the liquefied gas line 30 is equalized. Subsequently, the returning shut-off valve 19 is operated to open returning pipe 18, and the liquefied gas is sent from the recovery tank 13 to the liquefied gas line 30.

As described above, the recovery shut-off valve 15, the pressure equalization shut-off valve 17, and the returning shut-off valve 19 are operated, whereby the supply of the liquefied gas from the knockout drum 11 to the recovery tank 13 and from the recovery tank 13 to the liquefied gas line 30 can be easily and reliably performed. Therefore, the liquefied gas can be reused more efficiently.

In the present embodiment, the ship 1 includes a release pipe 21 and a release shut-off valve 22. The release pipe 21 communicates the inside of the recovery tank 13 with the outside of the recovery tank 13. The release shut-off valve 22 is provided in the release pipe 21 and is capable of opening and closing the release pipe 21.

In the present embodiment, the release shut-off valve 22 is operated to open the release pipe 21, so that the gas in the gas phase in the recovery tank 13 can be released to the outside. As a result, an increase in the internal pressure of the recovery tank 13 is suppressed. Therefore, the difference in pressure between the knockout drum 11 and the recovery tank 13 is small, so that the liquefied gas can be smoothly sent from the knockout drum 11 to the recovery tank 13. Therefore, the liquefied gas can be reused more efficiently.

### <Second Embodiment>

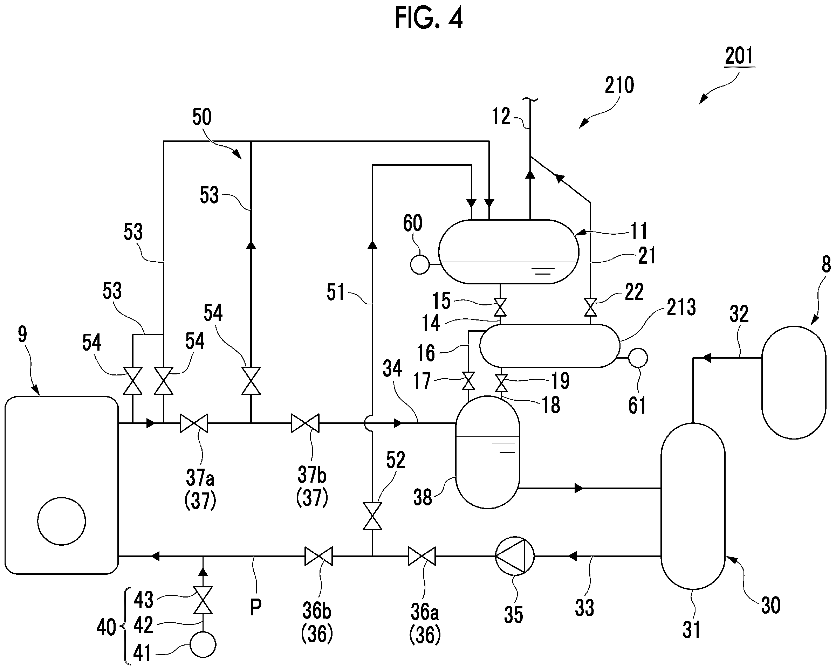

Hereinafter, a ship (floating structure) 201 according to a second embodiment of the present disclosure will be described with reference to Fig. 4. The same configurations as those in the first embodiment will be appropriately omitted by assigning the same names and the same reference numerals.

As shown in Fig. 4, the ship 201 according to the present embodiment includes a pipe system 210 partially different from that of the first embodiment, and the pipe system 210 includes the recovery tank 213 provided above the liquefied gas line 30. In the present embodiment, the recovery tank 213 is disposed above the catch tank 38.

### (Actions and Effects)

According to the ship 201 of the present embodiment, the following actions and effects are exhibited.

In addition, with the same configuration as in the above-described embodiment, the same actions and effects as in the above-described embodiment are exhibited.

In the present embodiment, the recovery tank 213 is provided above the liquefied gas line 30.

As a result, in a state where the pressure between the liquefied gas line 30 and the recovery tank 213 is equalized, the liquefied gas is fed from the recovery tank 213 to the liquefied gas line 30 by gravity. Therefore, it is not necessary to provide a pump for sending the liquefied gas from the recovery tank 213 to the liquefied gas line 30. Therefore, it is possible to suppress an increase in the number of components and reduce the manufacturing cost of the ship 201, and the ship 201 may be miniaturized.

### <Third Embodiment>

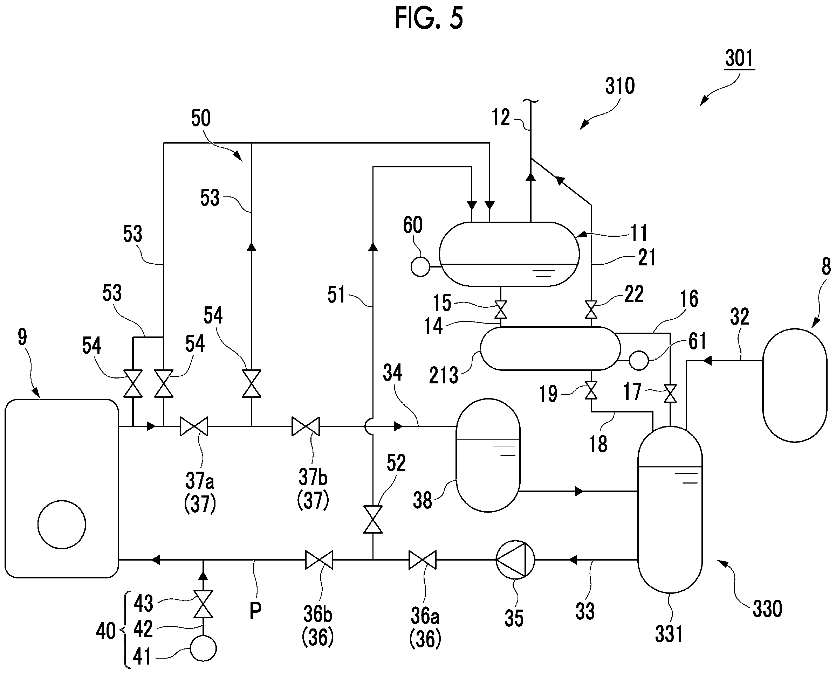

Hereinafter, a ship (floating structure) 301 according to a third embodiment of the present disclosure will be described with reference to Fig. 5. The same configurations as those in the first embodiment will be appropriately omitted by assigning the same names and the same reference numerals.

As shown in Fig. 5, the ship 301 according to the present embodiment includes a pipe system 310 partially different from that of the first embodiment, and the pipe system 310 includes the liquefied gas line 330 partially different from that of the first embodiment.

The liquefied gas line 330 includes an introduction portion 331. As in the first embodiment, the introduction portion 331 is a mixing tank capable of temporarily storing the liquefied gas guided from the liquefied gas tank 8 and the catch tank 38. The pressure equalization pipe 16 and the returning pipe 18 according to the present embodiment connect the recovery tank 213 and the introduction portion 331, and the pressure equalization pipe 16 communicates the gas phase region of the recovery tank 213 with the gas phase region of the introduction portion 331. In the present embodiment, the returning pump 20 is not provided in the returning pipe 18, but the returning pump 20 may be provided as in the first embodiment.

In addition, as in the second embodiment, the recovery tank 213 is provided above the liquefied gas line 30.

### (Actions and Effects)

The ship 301 according to the present embodiment includes the same configuration as the above-described embodiment. Therefore, with the same configuration as in the above-described embodiment, the same actions and effects as in the above-described embodiment are exhibited.

### <Fourth Embodiment>

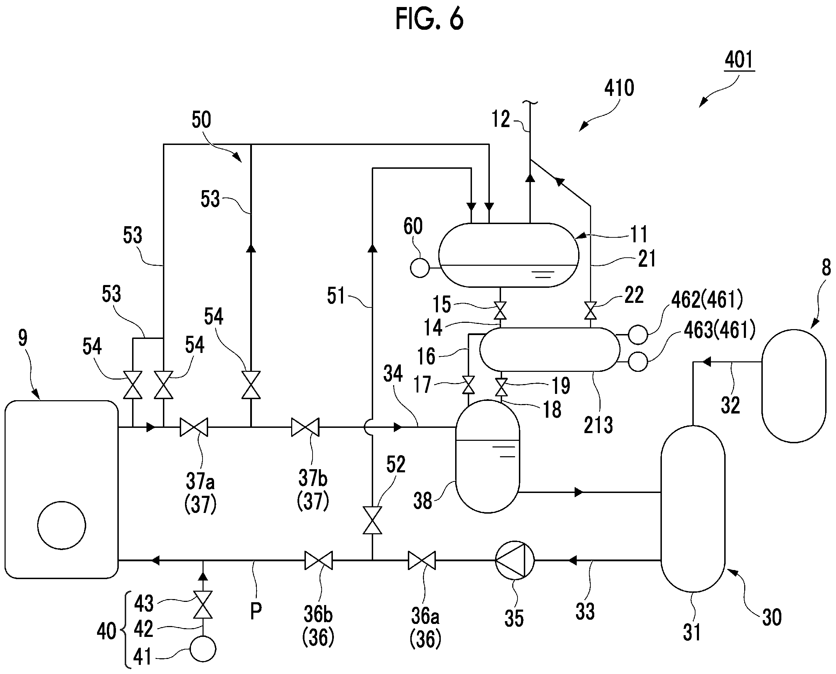

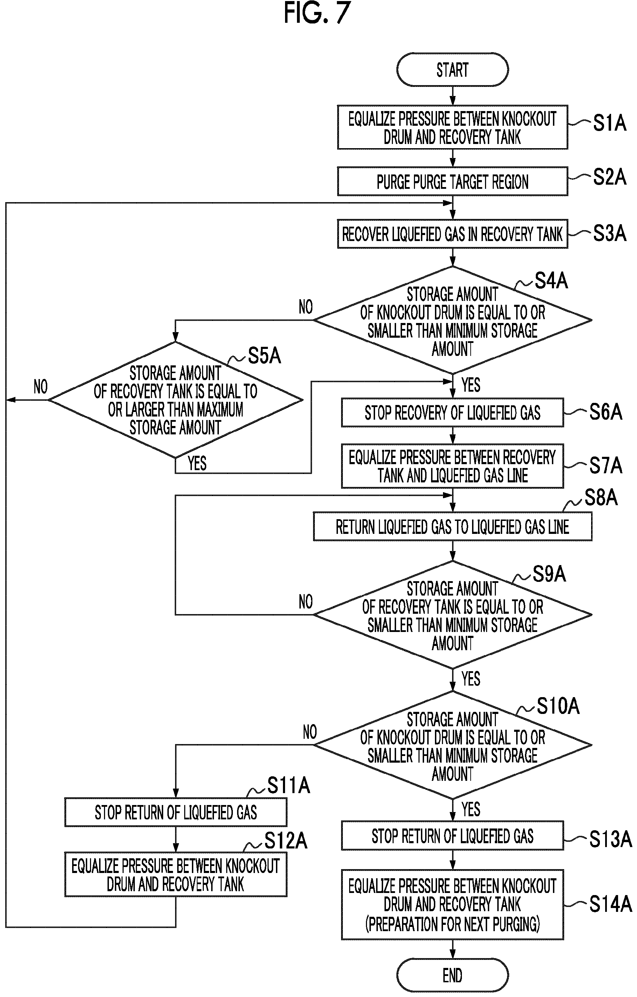

Hereinafter, a ship (floating structure) 401 according to a fourth embodiment of the present disclosure will be described with reference to Figs. 6 and 7. The same configurations as those in the first embodiment will be appropriately omitted by assigning the same names and the same reference numerals.

As shown in Fig. 6, the ship 401 according to the present embodiment includes a pipe system 410 partially different from that of the first embodiment, and the pipe system 210 includes the recovery tank 213 provided above the liquefied gas line 30 as in the second embodiment. In the present embodiment, the returning pump 20 is not provided in the returning pipe 18, but the returning pump 20 may be provided as in the first embodiment.

In addition, in the present embodiment, the recovery tank 213 is designed to be small, and the volume of the recovery tank 213 is smaller than the maximum storage amount of the liquefied gas in the knockout drum 11.

In addition, the second liquid level sensor (liquid level sensor) 461 according to the present embodiment can detect the upper limit position and the lower limit position of the liquid level of the liquefied gas in the recovery tank 213. More specifically, the second liquid level sensor 461 includes an upper limit position sensor 462 that detects an upper limit position of the liquid level of the liquefied gas in the recovery tank 213 and a lower limit position sensor 463 that detects a lower limit position of the liquid level of the liquefied gas in the recovery tank 213.

The second liquid level sensor 461 may detect both the upper limit position and the lower limit position of the liquid level of the liquefied gas in the recovery tank 213 by one sensor.

In addition, in the following, the storage amount of the liquefied gas in the recovery tank 213 in a case where the liquid level of the liquefied gas in the recovery tank 213 is at the upper limit position detected by the second liquid level sensor 461 is referred to as the maximum storage amount of the recovery tank 213. The maximum storage amount of the recovery tank 213 is an amount that can be regarded as a full tank state of the recovery tank 213.

### (Procedure for Returning Liquefied Gas)

Hereinafter, a procedure for returning the purged liquefied gas according to the present embodiment to the liquefied gas line 30 will be described.

However, since the recovery tank 213 of the present embodiment is designed to be small, the supply of the liquefied gas from the knockout drum 11 to the recovery tank 213 needs to be carried out in several times.

Hereinafter, a procedure for sending the liquefied gas stored in the knockout drum 11 to the liquefied gas line 30 in a case where the recovery tank 213 is small will be described with reference to Fig. 7. It should be noted that, before the start of the purging, the recovery shut-off valve 15, the pressure equalization shut-off valve 17, the returning shut-off valve 19, and the release shut-off valve 22 are in the closing state.

First, the release shut-off valve 22 is brought into the opening state to equalize the pressure between the knockout drum 11 and the recovery tank 213 (Step S1A). In addition, in Step S1A, the recovery shut-off valve 15 is brought into the opening state. In a case where the release shut-off valve 22 and the recovery shut-off valve 15 are already in the opening state and the pressure between the knockout drum 11 and the recovery tank 213 is equalized, Step S1A can be omitted.

In this state (an initial state after Step S1A is completed), the purge gas supplying device 40 is operated to supply the purge gas to the purge target region P to purge the purge target region P (Step S2A). In a case where the purging is started, the liquefied gas guided from the purge target region P to the knockout drum 11 is temporarily stored in the knockout drum 11. At this time, the liquefied gas is stored in the knockout drum 11 until the liquid level of the liquefied gas in the knockout drum 11 is positioned above the lower limit position detected by at least the first liquid level sensor 60.

In the knockout drum 11, the liquefied gas in the liquid phase, the purge gas in the gas phase, and the evaporated gas of the liquefied gas are separated into a gas and a liquid.

Then, since the recovery shut-off valve 15 is in the opening state, the liquefied gas flows down from the knockout drum 11 to the recovery tank 213. In this way, the liquefied gas is recovered in the recovery tank 213 (Step S3A).

Subsequently, the first liquid level sensor 60 detects whether or not the liquid level of the liquefied gas in the knockout drum 11 is lower than the lower limit position, and it is determined whether or not the storage amount of the knockout drum 11 is equal to or smaller than the minimum storage amount (Step S4A).

In a case where the storage amount of the knockout drum 11 is not equal to or smaller than the minimum storage amount (Step S4A; NO), the upper limit position sensor 462 detects whether or not the liquid level of the liquefied gas in the recovery tank 213 is higher than the upper limit position, and it is determined whether or not the storage amount of the recovery tank 213 is equal to or larger than the maximum storage amount (Step S5A). In a case where the storage amount of the recovery tank 213 is not equal to or larger than the maximum storage amount (Step S5A; NO), the liquefied gas is continuously recovered (Step S3A).

On the other hand, in a case where the storage amount of the recovery tank 213 is equal to or larger than the maximum storage amount (Step S5A; YES), the recovery shut-off valve 15 and the release shut-off valve 22 are brought into the closing state, and the recovery of the liquefied gas is stopped (Step S6A).

In addition, even in a case where the storage amount of the knockout drum 11 is equal to or smaller than the minimum storage amount (Step S4A; YES), the recovery shut-off valve 15 and the release shut-off valve 22 are brought into the closing state, and the recovery of the liquefied gas is stopped (Step S6A).

After the completion of Step S6A, the liquefied gas is stored in the recovery tank 213 until the liquid level of the liquefied gas in the recovery tank 213 is positioned above the lower limit position detected by at least the second liquid level sensor 461.

Then, the pressure equalization shut-off valve 17 is operated to bring the pressure equalization pipe 16 into the opening state, and the pressure between the recovery tank 213 and the liquefied gas line 30 is equalized (Step S7A). More specifically, the pressure between the recovery tank 213 and the catch tank 38 is equalized.

Thereafter, the returning shut-off valve 19 is brought into the opening state. Then, the liquefied gas is sent from the recovery tank 213 to the liquefied gas line 30 by gravity. In this way, the liquefied gas is returned to the liquefied gas line 30 (Step S8A).

Subsequently, the lower limit position sensor 463 detects whether or not the liquid level of the liquefied gas in the recovery tank 213 is lower than the lower limit position, and it is determined whether or not the storage amount of the recovery tank 213 is equal to or smaller than the minimum storage amount (Step S9A). In a case where the storage amount of the recovery tank 213 is not equal to or smaller than the minimum storage amount (Step S9A; NO), the liquefied gas is continuously returned (Step S8A).

On the other hand, in a case where the storage amount of the recovery tank 213 is equal to or smaller than the minimum storage amount (Step S9A; YES), the first liquid level sensor 60 detects whether or not the liquid level of the liquefied gas in the knockout drum 11 is lower than the lower limit position, and it is determined whether or not the storage amount of the knockout drum 11 is equal to or smaller than the minimum storage amount (Step S10A).

In a case where the storage amount of the knockout drum 11 is not equal to or smaller than the minimum storage amount (Step S10A; NO), the returning shut-off valve 19 and the pressure equalization shut-off valve 17 are brought into the closing state, and the return of the liquefied gas is stopped (Step S11A).

Then, the release shut-off valve 22 is brought into the opening state to equalize the pressure between the knockout drum 11 and the recovery tank 213 (Step S12A). In addition, in Step S12A, the recovery shut-off valve 15 is brought into the opening state.

After the completion of step S12A, the process returns to Step S3A, and the above-described series of flows are repeated.

On the other hand, in a case where the storage amount of the knockout drum 11 is equal to or smaller than the minimum storage amount (Step S10A; YES), the returning shut-off valve 19 and the pressure equalization shut-off valve 17 are brought into the closing state, and the return of the liquefied gas is stopped (Step S13A).

Then, the release shut-off valve 22 is brought into the opening state to equalize the pressure between the knockout drum 11 and the recovery tank 213 (Step S14A). In addition, in Step S14A, the recovery shut-off valve 15 is brought into the opening state. Step S14A is a step of preparing for the next purging.

After the above-described steps, the procedure for returning the purged liquefied gas to the liquefied gas line 30 is completed.

In the above-described procedure for returning the liquefied gas, each time the operation of changing the recovery shut-off valve 15, the pressure equalization shut-off valve 17, the returning shut-off valve 19, and the release shut-off valve 22 from the closing state to the opening state is performed, it is checked whether or not the recovery shut-off valve 15, the pressure equalization shut-off valve 17, the returning shut-off valve 19, and the release shut-off valve 22 are in the opening state, and conversely, each time the operation of changing the recovery shut-off valve 15, the pressure equalization shut-off valve 17, the returning shut-off valve 19, and the release shut-off valve 22 from the opening state to the closing state is performed, it is checked whether or not the recovery shut-off valve 15, the pressure equalization shut-off valve 17, the returning shut-off valve 19, and the release shut-off valve 22 are in the closing state. These confirmations may be visually performed or may be automatically performed by a control device (not shown).

In addition, the procedure for returning the liquefied gas described above may be manually performed or may be automatically performed by a control device (not shown).

### (Actions and Effects)

According to the ship 401 of the present embodiment, the following actions and effects are exhibited.

In addition, with the same configuration as in the above-described embodiment, the same actions and effects as in the above-described embodiment are exhibited.

In the present embodiment, the ship 401 includes a second liquid level sensor 461. The second liquid level sensor 461 can detect the upper limit position and the lower limit position of the liquid level of the liquefied gas in the recovery tank 213.

Accordingly, the second liquid level sensor 461 can detect that the storage amount of the liquefied gas in the recovery tank 213 is equal to or larger than the maximum storage amount by detecting the upper limit position of the liquid level of the liquefied gas. Accordingly, in a case where the recovery tank 213 having a smaller amount than the knockout drum 11 is used as in the present embodiment, the amount of the liquefied gas sent into the recovery tank 213 is suppressed to be equal to or larger than the amount of the recovery tank 213. In addition, the second liquid level sensor 461 can detect that the storage amount of the liquefied gas in the recovery tank 213 is equal to or smaller than the minimum storage amount by detecting the lower limit position of the liquid level of the liquefied gas. Accordingly, in a case where the exhaust of the liquefied gas from the recovery tank 213 is completed, the supply of the liquefied gas from the knockout drum 11 to the recovery tank 213 can be immediately switched. Therefore, the liquefied gas can be reused more efficiently.

Further, since the small-sized recovery tank 213 can be used as described above, the size of the ship 401 can be reduced.

### (Other Embodiments)

The embodiments of the present disclosure have been described in detail with reference to the drawings hereinbefore. However, the specific configuration is not limited to the embodiments, and includes design changes and the like within a scope not departing from the gist of the present disclosure.

In the above-described embodiment, the cases where the ships 1, 201, 301, and 401 are the ships that are propelled on the sea by the thermal energy generated by the combustion of the liquefied gas by the floating structure have been described, but the present disclosure is not limited thereto. For example, the floating structure may be a marine structure other than the ships 1, 201, 301, and 401 floating on the sea. More specifically, the floating structure may be a floating storage and regasification unit (FSRU) transported by an LNG vessel.

In the embodiment described above, the purge gas supply pipe 42 is connected between the downstream side supply shut-off valve 36b and the fuel consumer 9 in the supply pipe 33, but the present disclosure is not limited thereto. For example, the purge gas supply pipe 42 may be directly connected to the fuel consumer 9.

In the above-described embodiment, the pipe systems 10, 210, 310, and 410 include the release pipe 21 and the release shut-off valve 22, but the present disclosure is not limited thereto. The pipe systems 10, 210, 310, and 410 may not include the release pipe 21 and the release shut-off valve 22.

In the above-described embodiment, the case where the pressure equalization pipe 16 connects the recovery tanks 13 and 213 and the catch tank 38, and the case where the pressure equalization pipe 16 connects the recovery tanks 13 and 213 and the introduction portion 331 have been described. However, the present disclosure is not limited thereto. For example, the pressure equalization pipe 16 may be provided to connect a region between the catch tank 38 and the introduction portion 31 (or the introduction portion 331), and the recovery tank 13 and 213 in the return pipe 34.

### <Additional Notes>

For example, the floating structure described in each of the embodiments is understood as follows.

(1) A floating structure according to the first aspect includes a floating main structure, a liquefied gas tank 8 that is provided in the floating main structure and stores liquefied gas, a fuel consumer 9 that is provided in the floating main structure and is driven by the liquefied gas, liquefied gas lines 30 and 330 that connects the liquefied gas tank 8 and the fuel consumer 9, a knockout drum 11 into which the liquefied gas of the liquefied gas lines 30 and 330 is introduced together with purge gas, recovery tanks 13 and 213 that are provided below the knockout drum 11 and into which the liquefied gas stored in the knockout drum 11 flows down, a pressure equalization pipe 16 through which a gas phase region of the recovery tanks 13 and 213 and a gas phase region of the liquefied gas lines 30 and 330 communicate with each other, and a returning pipe 18 capable of sending the liquefied gas from the recovery tanks 13 and 213 to the liquefied gas lines 30 and 330.

Examples of the floating structure include the ships 1, 201, 301, 401, and the like described above.

In addition, examples of the floating main structure include the above-described hull 2.

The liquefied gas in the knockout drum 11 is sent to the recovery tanks 13 and 213 by gravity. Thereafter, in a case where the pressure between the recovery tanks 13 and 213 and the liquefied gas lines 30 and 330 is equalized by the pressure equalization pipe 16, the liquefied gas in the recovery tanks 13 and 213 is sent to the liquefied gas lines 30 and 330 through the returning pipe 18. In this way, the ship 1 can send the liquefied gas stored in the knockout drum 11 again to the liquefied gas lines 30 and 330 through the recovery tanks 13 and 213. In addition, by recovering the liquefied gas in the knockout drum 11 using the recovery tanks 13 and 213, the knockout drum 11 can be quickly emptied. Therefore, the amount of the liquefied gas in the knockout drum 11 that is evaporated and released into the atmosphere can be reduced.

In addition, since the pressure between the recovery tanks 13 and 213 and the liquefied gas lines 30 and 330 is equalized by the pressure equalization pipe 16 and the difference in pressure between the recovery tanks 13 and 213 and the liquefied gas lines 30 and 330 is reduced, the liquefied gas in the recovery tanks 13 and 213 can be smoothly sent to the liquefied gas lines 30 and 330.

(2) The floating structure of the second aspect is the floating structure of the first aspect, in which the recovery tank 213 may be provided above the liquefied gas lines 30 and 330.

As a result, in a state where the pressure between the liquefied gas lines 30 and 330 and the recovery tank 213 is equalized, the liquefied gas is sent from the recovery tank 213 to the liquefied gas lines 30 and 330 by gravity. Therefore, it is not necessary to provide a pump for sending the liquefied gas from the recovery tank 213 to the liquefied gas lines 30 and 330.

(3) The floating structure of the third aspect is the floating structure of the first or second aspect, in which the floating structure may further includes a returning pump 20 that is provided in the returning pipe 18 and that pumps the liquefied gas from the recovery tank 13 to the liquefied gas line 30.

Accordingly, the floating structure can send the liquefied gas from the recovery tank 13 to the liquefied gas line 30 by the returning pump 20. Therefore, the floating structure can send the liquefied gas from the recovery tank 13 to the liquefied gas line 30 regardless of the position of the recovery tank 13 with respect to the liquefied gas line 30. The restriction on the disposition of the recovery tank 13 is relaxed.

(4) The floating structure of the fourth aspect is the floating structure of any one of the first to third floating structures, in which the floating structure may further include a liquid level sensor capable of detecting an upper limit position and a lower limit position of a liquid level of the liquefied gas in the recovery tank 126.

For example, a second liquid level sensor 461 is an example of the liquid level sensor.

Accordingly, the liquid level sensor can detect that the storage amount of the liquefied gas in the recovery tank 213 is equal to or larger than the maximum storage amount by detecting the upper limit position of the liquid level of the liquefied gas. Accordingly, in a case where the recovery tank 213 having an amount smaller than that of the knockout drum 11 is used, the amount of the liquefied gas sent into the recovery tank 213 is suppressed to be equal to or larger than the amount of the recovery tank 213. In addition, the liquid level sensor can detect that the storage amount of the liquefied gas in the recovery tank 213 is equal to or smaller than the minimum storage amount by detecting the lower limit position of the liquid level of the liquefied gas. Accordingly, in a case where the exhaust of the liquefied gas from the recovery tank 213 is completed, the supply of the liquefied gas from the knockout drum 11 to the recovery tank 213 can be immediately switched.

(5) The floating structure of a fifth aspect is the floating structure of any one of the first to fourth aspects, in which the floating structure may further include a recovery pipe 14 that guides the liquefied gas from the knockout drum 11 to the recovery tanks 13 and 213, a recovery shut-off valve 15 that is provided in the recovery pipe 14 and that can open and close the recovery pipe 14, a pressure equalization shut-off valve 17 that is provided in the pressure equalization pipe 16 and that can open and close the pressure equalization pipe 16, and a returning shut-off valve 19 that is provided in the returning pipe 18 and that can open and close the returning pipe 18.

In the present aspect, the recovery shut-off valve 15 is operated to open the recovery pipe 14, and the liquefied gas is sent from the knockout drum 11 to the recovery tanks 13 and 213. In a case where the supply of the liquefied gas from the knockout drum 11 to the recovery tanks 13 and 213 is completed, the recovery shut-off valve 15 is operated to close the recovery pipe 14 and shut off the flow of the liquefied gas. Thereafter, the pressure equalization shut-off valve 17 is operated to open the pressure equalization pipe 16, and the pressure between the recovery tanks 13 and 213 and the liquefied gas lines 30 and 330 is equalized. Subsequently, the returning shut-off valve 19 is operated to open the returning pipe 18, and the liquefied gas is sent from the recovery tanks 13 and 213 to the liquefied gas lines 30 and 330.

As described above, the recovery shut-off valve 15, the pressure equalization shut-off valve 17, and the returning shut-off valve 19 are operated, whereby the supply of the liquefied gas from the knockout drum 11 to the recovery tanks 13 and 213 and from the recovery tanks 13 and 213 to the liquefied gas lines 30 and 330 can be easily and reliably performed.

(6) The floating structure of a sixth aspect is the floating structure of any one of the first to fifth aspects, in which the floating structure may further include a release pipe 21 through which an inside of the recovery tank 13 and 213 and an outside of the recovery tanks 13 and 213 communicate with each other, and a release shut-off valve 22 that is provided in the release pipe 21 and that can open and close the release pipe 21.

In the present aspect, the release shut-off valve 22 is operated to open the release pipe 21, so that the gas in the gas phase in the recovery tanks 13 and 213 can be released to the outside. As a result, the increase in the internal pressure of the recovery tanks 13 and 213 is suppressed. Therefore, the difference in pressure between the knockout drum 11 and the recovery tanks 13 and 213 is small, so that the liquefied gas can be smoothly sent from the knockout drum 11 to the recovery tanks 13 and 213.

### Industrial Applicability

According to the floating structure of the present disclosure, it is possible to reduce energy loss.

### Reference Signs List

1: ship (floating structure)
2: hull (floating main structure)
3a: bow
3b: stern
4: superstructure
5: broadside
6: bottom
7: upper deck
8: liquefied gas tank
9: fuel consumer
10: pipe system
11: knockout drum
12: exhaust pipe
13: recovery tank
14: recovery pipe
15: recovery shut-off valve
16: pressure equalization pipe
17: pressure equalization shut-off valve
18: returning pipe
19: returning shut-off valve
20: returning pump
21: release pipe
22: release shut-off valve
30: liquefied gas line
31: introduction portion
32: introduction pipe
33: supply pipe
34: return pipe
35: supply pump
36: supply shut-off valve
36a: upstream side master fuel valve
36b: downstream side supply shut-off valve
37: return shut-off valve
37a: upstream side return shut-off valve
37b: downstream side master fuel valve
38: catch tank
40: purge gas supplying device
41: purge gas supply unit
42: purge gas supply pipe
43: purge gas supply valve
50: purge line
51: supply side purge pipe
52: supply side purge valve
53: return side purge pipe
54: return side purge valve
60: first liquid level sensor
61: second liquid level sensor
201: ship (floating structure)
210: pipe system
213: recovery tank
301: ship (floating structure)
310: pipe system
331: introduction portion
401: ship (floating structure)
410: pipe system
461: second liquid level sensor (liquid level sensor)
462: upper limit position sensor
463: lower limit position sensor
P: purge target region
S: fuel preparation room

## Claims

1. A floating structure comprising:
a floating main structure;
a liquefied gas tank that is provided in the floating main structure and stores liquefied gas;
a fuel consumer that is provided in the floating main structure and is driven by the liquefied gas;
a liquefied gas line that connects the liquefied gas tank and the fuel consumer;
a knockout drum into which the liquefied gas of the liquefied gas line is introduced together with purge gas;
a recovery tank that is provided below the knockout drum and into which the liquefied gas stored in the knockout drum flows down;
a pressure equalization pipe through which a gas phase region of the recovery tank and a gas phase region of the liquefied gas line communicate with each other; and
a returning pipe capable of sending the liquefied gas from the recovery tank to the liquefied gas line.

2. The floating structure according to claim 1, wherein the recovery tank is provided above the liquefied gas line.

3. The floating structure according to claim 1 or 2, further comprising: a returning pump that is provided in the returning pipe and pumps the liquefied gas from the recovery tank to the liquefied gas line.

4. The floating structure according to claim 1 or 2, further comprising:
a liquid level sensor capable of detecting an upper limit position and a lower limit position of a liquid level of the liquefied gas in the recovery tank.

5. The floating structure according to claim 1 or 2, further comprising:
a recovery pipe that guides the liquefied gas from the knockout drum to the recovery tank;
a recovery shut-off valve that is provided in the recovery pipe and capable of opening and closing the recovery pipe;
a pressure equalization shut-off valve that is provided in the pressure equalization pipe and capable of opening and closing the pressure equalization pipe; and
a returning shut-off valve that is provided in the returning pipe and capable of opening and closing the returning pipe.

6. The floating structure according to claim 1 or 2, further comprising:
a release pipe through which an inside of the recovery tank and an outside of the recovery tank communicate with each other; and
a release shut-off valve that is provided in the release pipe and capable of opening and closing the release pipe.
